# FASCICULE DE BREVET EUROPEEN

(11) **EP 2 818 045 B1**
(45) Date de publication et mention de la délivrance du brevet: **11.03.2020**
(21) Numéro de dépôt: 14173957.3
(22) Date de dépôt: 25.06.2014
(51) Int. Cl.: A01M 7/00, A01M 1/20, B65D 83/20, B65D 83/44

(54) **PROCÉDÉ D'ÉLIMINATION D'INSECTES ET DISPOSITIF ASSOCIÉ**
VERFAHREN ZUR BESEITIGUNG VON INSEKTEN, UND ENTSPRECHENDE VORRICHTUNG
INSECT CONTROL METHOD AND ASSOCIATED DEVICE

(30) Priorité: 27.06.2013 FR 1356186
(43) Date de publication de la demande: 31.12.2014
(73) Titulaire: SOJAM, 95000 Cergy (FR)
(72) Inventeur: Leclerq, Gérard, 95290 L'Isle Adam (FR); Revel, Sylvain, 92400 Courbevoie (FR)
(74) Mandataire: Nony

(56) Documents cités:
- DE-U1-202012 000 759
- US-A- 5 803 367
- US-A1- 2006 255 077

## Description

L'invention concerne notamment des procédés d'élimination de guêpes et/ou de frelons, notamment par pulvérisation d'un produit insecticide au niveau d'un nid de guêpes et/ou d'un nid de frelons.

La demande US 2006/255077 A1 divulgue un procédé d'élimination d'insectes par pulvérisation d'un produit insecticide.

On connait des compositions insecticides pressurisées comportant, en tant que fluide propulseur, un gaz liquéfié.

Toutefois, lorsque de telles compositions sont pulvérisées, la portée du jet obtenu peut s'avérer insuffisante, notamment lorsque l'utilisateur cherche à éliminer des insectes tout en restant à bonne distance de sa cible. Un tel besoin existe par exemple lorsqu'un utilisateur cherche à détruire des nids d'insectes dangereux comme des guêpes.

Il existe un besoin pour disposer de nouveaux procédés d'élimination d'insectes permettant à un utilisateur de rester à bonne distance de sa cible.

Il existe un besoin pour disposer de nouveaux dispositifs de pulvérisation de compositions insecticides.

Il existe encore un besoin pour disposer de nouvelles compositions insecticides pressurisées permettant d'obtenir un jet de portée augmentée lors de leur pulvérisation.

La présente invention vise à répondre aux besoins précités.

Selon un premier aspect, la présente invention concerne un procédé d'élimination d'insectes par pulvérisation d'une composition insecticide de manière à éliminer des guêpes et/ou des frelons, la pulvérisation étant effectuée à l'aide d'un dispositif de diffusion d'un aérosol, la composition insecticide comportant :
- un produit insecticide apte à tuer les guêpes et/ou les frelons, et
- un mélange d'au moins un gaz liquéfié et d'au moins un gaz comprimé, le mélange étant configuré pour permettre la propulsion du produit insecticide lors de sa pulvérisation, la composition insecticide étant caractérisée en ce que :
   - le rapport massique (masse de gaz liquéfié(s))/(masse de gaz comprimé(s)) est compris entre 5 et 30, notamment entre 15 et 25, et en ce que le mélange comporte, notamment est constitué par, un mélange 1,1,1,2-tétrafluoroéthane et dioxyde de carbone.

Les inventeurs ont constaté que l'association d'un gaz liquéfié et d'un gaz comprimé permet avantageusement d'augmenter très significativement la portée du jet obtenu après pulvérisation.

Ainsi, grâce à l'invention, l'utilisateur peut éliminer efficacement les insectes tout en restant à bonne distance de ces derniers.

Le gaz liquéfié présente une nature chimique distincte de celle du gaz comprimé. Le mélange de gaz est utilisé en tant que gaz propulseur permettant la distribution du produit insecticide sous la forme d'un aérosol.

Le mélange de gaz peut être ininflammable.

Dans un exemple de réalisation préféré, le gaz liquéfié est choisi parmi : les hydrofluorocarbures, les alcanes, notamment le butane, le propane ou les mélanges butane/propane, le diméthyléther, ou leurs mélanges, le gaz liquéfié étant, de préférence, un hydrofluorocarbure, de manière particulièrement préférée du 1,1,1,2-tétrafluoroéthane.

Dans un exemple de réalisation préféré, le gaz comprimé est choisi parmi : l'azote, le dioxyde de carbone, le protoxyde d'azote, l'air ou leurs mélanges, le gaz comprimé étant de manière particulièrement préférée du dioxyde de carbone.

La mise en œuvre de tels gaz comprimés permet avantageusement d'obtenir une portée particulièrement importante pour le jet de produit insecticide obtenu après pulvérisation.

Une telle association permet avantageusement l'obtention d'une portée particulièrement importante pour le jet de produit insecticide obtenu après pulvérisation.

Avantageusement, le produit insecticide est pulvérisé au sein d'au moins un nid de guêpes et/ou d'au moins un nid de frelons. Le produit insecticide peut être pulvérisé au sein d'une pluralité de nids de guêpes et/ou d'une pluralité de nids de frelons.

L'invention se rapporte également à un dispositif de diffusion d'un aérosol pour la mise en oeuvre du procédé précédemment décrit, comportant :
- un réservoir adapté pour contenir un fluide sous pression, le réservoir contenant une composition insecticide sous pression destinée à être distribuée sous forme d'aérosol, la composition insecticide comportant :
   - un produit insecticide apte à tuer les guêpes et/ou les frelons, et
   - un mélange d'au moins un gaz liquéfié et d'au moins un gaz comprimé, le mélange étant configuré pour permettre la propulsion du produit insecticide lors de sa pulvérisation, la composition insecticide étant caractérisée en ce que :
      - le rapport massique (masse de gaz liquéfié(s))/(masse de gaz comprimé(s)) est compris entre 5 et 30, notamment entre 15 et 25, et en ce que le mélange comporte, notamment est constitué par, un mélange 1,1,1,2-tétrafluoroéthane et dioxyde de carbone,
      - une tête de pulvérisation fixée au réservoir comportant un orifice de distribution permettant la distribution du produit insecticide vers le milieu extérieur,
      - un moyen d'actionnement de la distribution du produit insecticide au travers de l'orifice de distribution.

Le mélange de gaz peut être contenu, au sein du réservoir, dans le même volume que le produit insecticide lorsque le dispositif n'est pas dans une configuration de pulvérisation. Ainsi, le mélange de gaz peut être, au sein du réservoir, en contact avec le produit insecticide lorsque le dispositif n'est pas dans une configuration de pulvérisation.

La composition insecticide peut présenter de tels rapports massiques avant sa première utilisation et éventuellement pendant toute la durée durant laquelle elle est stockée au sein du réservoir.

Dans un exemple de réalisation, le dispositif est configuré pour distribuer le produit insecticide au travers de l'orifice de distribution avec un débit supérieur ou égal à 40 grammes de produit insecticide par seconde, de préférence à 50 grammes de produit insecticide par seconde, de préférence à 60 grammes de produit insecticide par seconde, de préférence à 70 grammes de produit insecticide par seconde, de préférence à 80 grammes de produit insecticide par seconde.

L'utilisation d'un dispositif permettant de distribuer le produit insecticide avec un débit important permet avantageusement d'obtenir un jet de produit de portée améliorée.

Avantageusement, le dispositif comporte une partie de préhension fixée au réservoir et à la tête de pulvérisation, la partie de préhension portant le moyen d'actionnement de la distribution du produit insecticide, la partie de préhension étant sous la forme d'un manche et le moyen d'actionnement sous la forme d'une détente permettant d'actionner la distribution du produit insecticide par pression sur la détente.

La présence d'une telle partie de préhension permet avantageusement à l'utilisateur de bénéficier d'un confort d'utilisation accru.

La détente présente avantageusement un ou plusieurs relief(s) de positionnement des doigts de l'utilisateur.

Le dispositif peut être configuré pour pulvériser le produit insecticide lorsqu'une pression est exercée sur la détente dans une direction opposée à celle du réservoir.

La tête de pulvérisation peut comporter une valve et un diffuseur type « extincteur ».

On peut utiliser une valve de type EM8 commercialisée par la Société COSTER.

Dans un exemple de réalisation, la tête de pulvérisation comporte une valve de diffusion débouchant par au moins un gicleur au niveau de l'orifice de distribution, le gicleur ayant sur tout ou partie de sa longueur un diamètre interne supérieur ou égal à 4 mm, de préférence à 4,5 mm, de préférence à 5 mm, de préférence à 5,5 mm, de préférence à 6 mm, le gicleur ayant, par exemple, sur tout ou partie de sa longueur un diamètre interne compris entre 5 mm et 7 mm, notamment entre 5,5 mm et 6,5 mm.

Par « diamètre interne du gicleur », il faut comprendre la plus grande dimension mesurée en section transversale sans compter l'épaisseur de la paroi du gicleur.

Dans un exemple de réalisation, la tête de pulvérisation comporte une valve de diffusion débouchant par au moins un gicleur au niveau de l'orifice de distribution, le gicleur présentant une pluralité d'orifices, notamment deux orifices, au travers desquels le produit insecticide est destiné à pénétrer dans le gicleur lors de l'actionnement de la distribution du produit insecticide.

Dans un exemple de réalisation, tout ou partie des orifices ont une taille supérieure ou égale à 0,7 mm, de préférence à 1 mm, de préférence à 1,5 mm, de préférence à 2 mm, de préférence à 2,5 mm, de préférence à 3 mm, la taille de tout ou partie des orifices étant, par exemple, comprise entre 3 mm et 4 mm, notamment comprise entre 3 mm et 3,5 mm.

Par « taille des orifices », il faut comprendre la plus grande dimension desdits orifices.

Dans un exemple de réalisation, le dispositif est configuré pour permettre une pulvérisation continue du produit insecticide par pression continue sur le moyen d'actionnement pendant une durée d'au moins 2 secondes, par exemple d'au moins 4 secondes, par exemple d'au moins 10 secondes. En d'autres termes, dans ce cas, le dispositif est, par exemple, configuré pour permettre une pulvérisation continue pendant une durée de 4 secondes si l'utilisateur appuie sur le moyen d'actionnement de manière continue pendant 4 secondes.

Avantageusement, le produit insecticide est pulvérisé durant au moins une seconde, de préférence durant au moins dix secondes, de préférence durant au moins quinze secondes, de préférence durant au moins vingt secondes.

Avantageusement, une fois le produit insecticide pulvérisé, au moins 50 %, de préférence au moins 75 %, de préférence au moins 90 %, des guêpes ou des frelons initialement présents dans le(s) nid(s) traité(s) ont été tués.

Selon un autre de ses aspects, la présente invention concerne un réservoir adapté pour contenir un fluide sous pression, le réservoir contenant une composition insecticide sous pression destinée à être distribuée sous forme d'aérosol, la composition insecticide étant notamment destinée à la mise en œuvre d'un procédé décrit ci-dessus, et la composition insecticide comportant :
- un produit insecticide apte à tuer les guêpes et/ou les frelons, et
- un mélange d'au moins un gaz liquéfié et d'au moins un gaz comprimé, le mélange étant configuré pour permettre la propulsion du produit insecticide lors de sa pulvérisation, le mélange comportant, notamment étant constitué par, un mélange 1,1,1,2-tétrafluoroéthane et dioxyde de carbone,
le rapport massique (masse de gaz liquéfié(s))/(masse de gaz comprimé(s)) étant compris entre 5 et 30, notamment entre 15 et 25.

Le réservoir peut avoir une forme allongée le long d'un axe longitudinal. Dans ce cas, le moyen d'actionnement peut ne pas être placé dans le prolongement du réservoir le long de son axe longitudinal. Le réservoir peut avoir toute forme, il peut être de forme sensiblement cylindrique, par exemple.

Une telle composition permet avantageusement après pulvérisation d'obtenir un jet de produit insecticide de particulièrement longue portée.

Avantageusement, le réservoir a un volume inférieur ou égal à 1 L, de préférence compris entre 0,1 L et 1 L, de préférence compris entre 0,5 L et 1 L. Le réservoir peut avoir un volume compris entre 0,7 L et 0,8 L, notamment sensiblement égal à 0,75 L.

L'ensemble des caractéristiques décrites plus haut s'applique aux dispositifs de pulvérisation selon l'invention. En particulier, le réservoir faisant partie de ces dispositifs peut avoir un volume inférieur ou égal à 1 L, de préférence compris entre 0,1 L et 1 L, de préférence compris entre 0,5 L et 1 L et/ou les dispositifs peuvent comporter un gicleur tel que décrit plus haut.

De tels dispositifs peuvent être utilisés dans le cadre d'un procédé d'élimination d'insectes, notamment de guêpes et/ou de frelons, en pulvérisant à l'aide desdits dispositifs le produit insecticide de manière à éliminer lesdits insectes.

La partie de préhension est avantageusement montée amovible sur le réservoir.

Selon un autre de ses aspects, la présente invention concerne un kit comportant les différents éléments des dispositifs décrits plus haut à l'état au moins partiellement assemblés ou complètement désassemblés.

Selon un autre de ses aspects, la présente invention concerne un réservoir adapté pour contenir un fluide sous pression, le réservoir contenant une composition insecticide sous pression destinée à être distribuée sous forme d'aérosol, la composition insecticide étant destinée à la mise en œuvre d'un procédé d'élimination de guêpes et/ou de frelons tel que décrit plus haut, et la composition insecticide comportant :
- un produit insecticide apte à tuer les guêpes et/ou les frelons en une proportion massique, par rapport au poids total de la composition insecticide, comprise entre 55 % et 61 %,
- du 1,1,1,2-tétrafluoroéthane en une proportion massique, par rapport au poids total de la composition insecticide, comprise entre 37% et 42 %, et
- du dioxyde de carbone en complément à 100%,
le mélange 1,1,1,2-tétrafluoroéthane et dioxyde de carbone étant configuré pour permettre la propulsion du produit insecticide lors de sa pulvérisation.

Une telle composition permet avantageusement après pulvérisation d'obtenir un jet de produit insecticide de particulièrement longue portée.

Selon encore un autre de ses aspects, la présente invention concerne l'utilisation d'un mélange d'au moins un gaz liquéfié et d'au moins un gaz comprimé, le mélange étant configuré pour permettre la propulsion d'un produit insecticide lors de sa pulvérisation, pour augmenter la portée d'un jet du produit insecticide obtenu après pulvérisation.

Avantageusement, le mélange utilisé comporte, notamment est constitué par, un mélange 1,1,1,2-tétrafluoroéthane et dioxyde de carbone.

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente en perspective un dispositif de pulvérisation selon l'invention,
- la figure 2 représente une coupe schématique et partielle selon II-II du dispositif de la figure 1,
- la figure 3 représente la valve utilisée dans le dispositif de pulvérisation de la figure 1, et
- la figure 4 représente schématiquement la mise en œuvre d'un procédé selon l'invention.

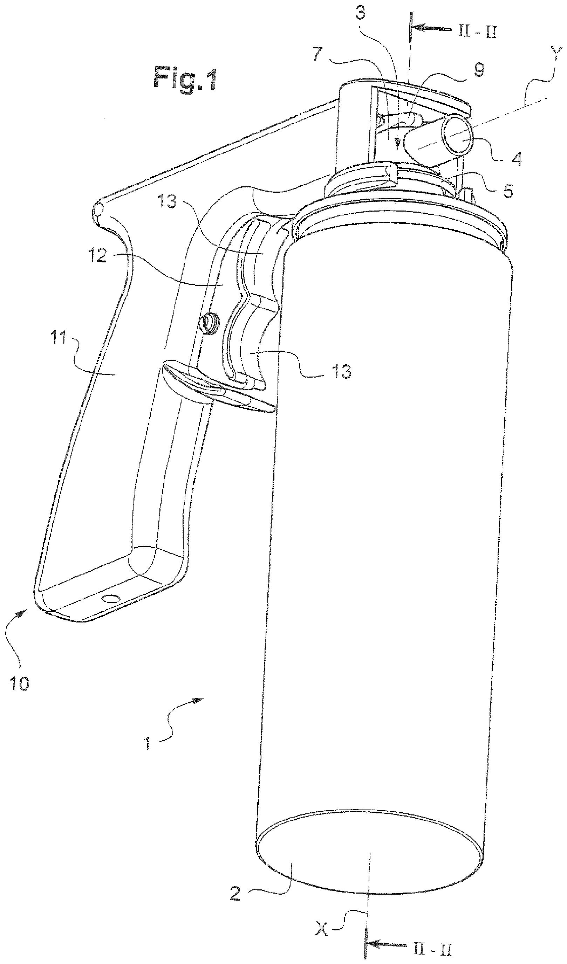

On a représenté à la figure 1 un dispositif 1 de pulvérisation selon l'invention comportant un réservoir 2, par exemple un bidon aérosol pressurisé, le réservoir 2 comportant une composition insecticide pressurisée.

Le réservoir 2 peut être en acier ou en aluminium. Le volume du réservoir 2 est adapté à la quantité de produit insecticide nécessaire pour le traitement insecticide, en particulier adapté pour le traitement d'au moins un nid de guêpes ou d'un nid de frelons, notamment d'un unique nid de guêpes ou d'un unique nid de frelons.

Le réservoir 2 peut avoir un volume compris entre 0,5 L et 1 L, de préférence d'environ 0,75 L. La pression à l'intérieur du réservoir 2 peut être d'au moins 2 bars, par exemple d'au moins 3 bars, voire d'au moins 4 bars.

Une tête de pulvérisation 3, par exemple en matière plastique, est fixée à ce réservoir 2. La tête de pulvérisation 3 obture le réservoir 2 comme représenté. La tête de pulvérisation 3 comporte un orifice de distribution 4 par lequel le produit insecticide est destiné à être distribué sous la forme d'un aérosol, le long d'au moins une direction de distribution Y.

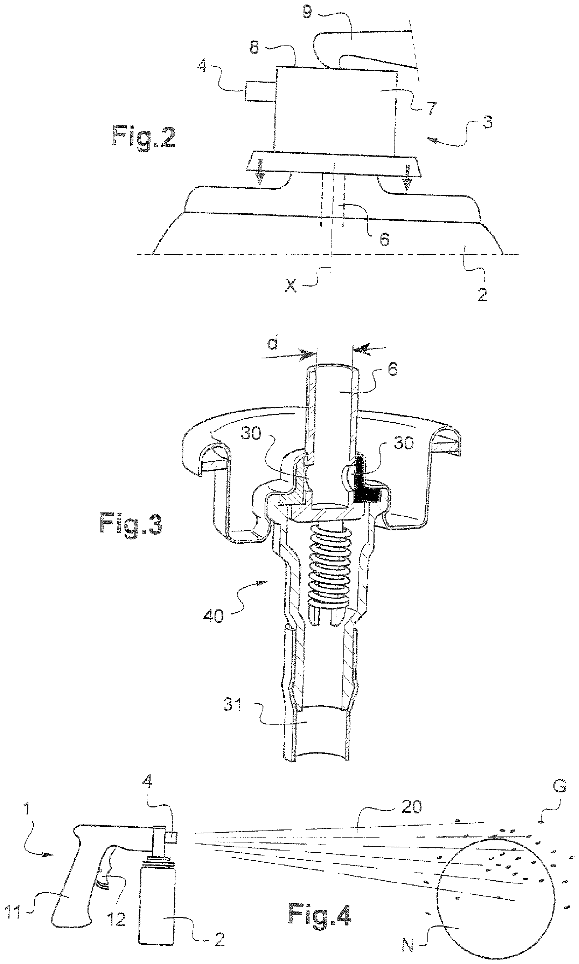

La tête de distribution 3 comporte un bouton poussoir 7 ainsi qu'une valve de diffusion débouchant, par un gicleur 6 (voir figure 2), dans un canal intérieur coudé du bouton-poussoir 7. Ce canal intérieur débouche, à l'extrémité opposé, par l'orifice de distribution 4. Au repos, de manière habituelle, le bouton-poussoir 7 est maintenu élastiquement, par un ressort, dans une position haute correspondant à une position fermée de la valve de diffusion. La position basse du bouton-poussoir correspond à une position ouverte de la valve de diffusion.

Le bouton-poussoir 7 définit une surface 8 sur laquelle une patte 9 vient en appui. Cette patte 9 est configurée pour provoquer une translation du bouton poussoir 8 vers le réservoir 2 dans la direction de translation T suite à l'actionnement de la détente 12 laquelle sera détaillée dans la suite. Cette translation provoque, par poussée du bouton-poussoir 7 sur le gicleur 6, une ouverture de la valve de diffusion et, par conséquent, la distribution du produit insecticide.

Dans l'exemple illustré, le réservoir 2 présente une forme allongée selon un axe longitudinal X, le réservoir 2 étant par exemple, comme représenté, de forme cylindrique. L'axe de distribution Y peut, comme illustré, être transverse, notamment sensiblement perpendiculaire, par rapport à l'axe longitudinal X du réservoir 2. Dans une variante non illustrée, l'axe longitudinal X du réservoir 2 coïncide avec l'axe de distribution Y.

Le dispositif 1 comporte, en outre, une partie de préhension 10 fixée au réservoir 2 et à la tête de distribution 3. Le dispositif 1 se présente sous la forme d'une pièce à main. La partie de préhension 10 peut, comme illustré, être fixée par enclipsage sur une partie de base 5 de la tête de distribution 3. Il est toutefois possible de fixer la partie de préhension 10 par tout moyen connu de l'homme du métier. La partie de préhension 10 comporte un manche 11 par lequel l'utilisateur peut tenir le dispositif 1 ainsi qu'une détente 12 permettant lorsque l'utilisateur appuie dessus de distribuer le produit insecticide et le gaz propulseur au travers de l'orifice de distribution 4.

La présence d'une telle partie de préhension 10 est avantageuse dans la mesure où elle permet à l'utilisateur de bénéficier d'un confort d'utilisation accru.

La détente 12 peut comme illustré comporter au moins un relief 13. Dans l'exemple de réalisation illustré, la détente 12 comporte deux reliefs 13 en creux. Bien entendu, le nombre et la forme des reliefs 13 peuvent varier sans sortir du cadre de la présente invention. Le dispositif 1 illustré est configuré pour permettre la distribution du produit insecticide lorsqu'une pression est exercée sur la détente 12 dans une direction opposée à celle du réservoir 2.

On a représenté à la figure 3 la structure de la valve de diffusion 40 utilisée dans le dispositif 1. La valve de diffusion débouche par un gicleur 6 dans un canal du bouton-poussoir. Le gicleur 6 est, comme illustré, sous la forme d'une tige creuse présentant à sa surface une pluralité d'orifices 30 au travers desquels le produit insecticide est destiné à pénétrer dans le gicleur 6 lors de l'actionnement du dispositif 1.

Lors d'une pression sur le bouton-poussoir, le produit insecticide traverse d'abord le tube plongeur 31 pour ensuite pénétrer dans le gicleur 6 en passant au travers des orifices 30.

Le gicleur 6 peut comme illustré comporter deux orifices 30 diamétralement opposés.

Les orifices 30 ont une taille supérieure ou égale à 0,7 mm, de préférence à 1 mm, de préférence à 1,5 mm, de préférence à 2 mm, de préférence à 2,5 mm, de préférence à 3 mm. La taille des orifices 30 est, par exemple, comprise entre 3 mm et 4 mm, notamment comprise entre 3 mm et 3,5 mm.

Le gicleur 6 a sur tout ou partie de sa longueur un diamètre interne d supérieur ou égal à 4 mm, de préférence à 4,5 mm, de préférence à 5 mm, de préférence à 5,5 mm, de préférence à 6 mm. Le gicleur 6 a, par exemple, sur tout ou partie de sa longueur un diamètre interne d compris entre 5 mm et 7 mm, notamment entre 5,5 mm et 6,5 mm.

Afin d'utiliser le dispositif 1, l'utilisateur agite éventuellement le réservoir 2, saisit le dispositif 1 par le manche 11 et positionne au moins un de ses doigts sur au moins un des reliefs 13.

Lorsque la détente 12 est pressée, un mélange du produit insecticide et du gaz propulseur est distribué au travers de l'orifice de distribution 4. L'utilisateur peut maintenir une pression sur la détente 12 de manière à pulvériser le produit insecticide de manière continue pendant au moins 4 secondes, par exemple au moins 8 secondes.

On a représenté à la figure 4 un procédé d'élimination de guêpes G dans lequel l'aérosol 20 de produit insecticide est dirigé au niveau d'un nid N de guêpes G et est distribué par pression de la détente 12.

L'invention permet avantageusement à l'utilisateur de se tenir à bonne distance de sa cible lors de l'élimination des insectes et ainsi d'éliminer de manière relativement sécurisée des insectes dangereux.

### Exemple 1 (invention)

Une composition insecticide aérosol de 750 mL selon l'invention a été réalisée et présente la composition suivante :

**Tableau 1**

| Produit | Quantité |
|---|---|
| Produit actif: | 391 grammes |
| HFC 134A: | 260 grammes |
| CO₂: | 14 grammes |

Les substances actives utilisées sont des pyréthrinoïdes : D-Phénothrine et Tétraméthrine.

### Exemple 2 (comparatif)

Les performances de la composition selon l'exemple 1 ont été comparées avec celles d'une composition ne présentant que du HFC 134A (ou 1,1,1,2-tétrafluoroéthane) en tant que fluide propulseur.

Une valve de type EM8 commercialisée par la Société COSTER a été utilisée dans ces essais.

Les performances suivantes ont été obtenues :
- Aérosol au HFC 134A (aussi désigné en tant que R134A) seul permet l'obtention d'une distance de pulvérisation d'environ 6 mètres.
- Aérosol au HFC 134A (aussi désigné en tant que R134A) + CO₂ permet l'obtention d'une distance de pulvérisation d'environ 10 mètres.

Pour mesurer la distance de pulvérisation obtenue, le protocole suivant a été mis en œuvre.

Les essais ont été réalisés dans un hangar fermé pour éviter les mouvements d'air. Des feuilles de papier sensibles au solvant organique ont été placées au sol sur une longueur de 6 mètres. L'opérateur s'est placé à 4 mètres de la première feuille et a appuyé pendant 4 secondes sur le diffuseur de chacun des aérosols. Les essais ont été répétés deux fois.

### RESULTAT :

**Tableau 2**

| AEROSOLS | DISTANCE (en mètres) |
|---|---|
| Echantillon n° 1 R134A | 5,5 |
| Echantillon n° 2 R134A | 6 |
| Echantillon n° 3 R134A + CO₂ | 10 |
| Echantillon n° 4 R134A + CO₂ | 9 |

Bien entendu, l'invention n'est pas limitée aux seuls modes de réalisation décrits et représentés.

L'expression «comportant un(e) » / « contenant un(e) » doit être comprise comme étant synonyme de « comportant au moins un(e) » / « contenant au moins un(e) ».

L'expression « compris entre ... et ... » ou «allant de ... à ... » doit être comprise comme incluant les bornes.

## Revendications

1. Procédé d'élimination d'insectes (G) comportant une étape de pulvérisation d'une composition insecticide de manière à éliminer des guêpes (G) et/ou des frelons, la pulvérisation étant effectuée à l'aide d'un dispositif (1) de diffusion d'un aérosol, la composition insecticide comportant :
• un produit insecticide apte à tuer les guêpes et/ou les frelons, et
• un mélange d'au moins un gaz liquéfié et d'au moins un gaz comprimé, le mélange étant configuré pour permettre la propulsion du produit insecticide lors de sa pulvérisation,
la composition insecticide étant **caractérisée en ce que** le mélange comporte, notamment est constitué par, un mélange 1,1,1,2-tétrafluoroéthane et dioxyde de carbone, et **en ce que** le rapport massique entre la masse de gaz liquéfié(s) et la masse de gaz comprimé(s) est compris entre 5 et 30, notamment entre 15 et 25.

2. Procédé selon la revendication 1, le gaz liquéfié étant choisi parmi : les hydrofluorocarbures, les alcanes, notamment le butane, le propane ou les mélanges butane/propane, le diméthyléther, ou leurs mélanges, le gaz liquéfié étant, de préférence, un hydrofluorocarbure, de manière particulièrement préférée du 1,1,1,2-tétrafluoroéthane.

3. Procédé selon l'une quelconque des revendications 1 à 2, le gaz comprimé étant choisi parmi : l'azote, le dioxyde de carbone, le protoxyde d'azote, l'air ou leurs mélanges, le gaz comprimé étant de préférence du dioxyde de carbone.

4. Procédé selon l'une quelconque des revendications précédentes, le rapport massique entre, la masse de gaz liquéfié(s) plus la masse de gaz comprimé(s), et la masse totale de la composition insecticide étant compris entre 25 % et 70 %, notamment entre 35 % et 50 %.

5. Procédé selon l'une quelconque des revendications précédentes, le produit insecticide étant pulvérisé au sein d'au moins un nid de guêpes et/ou d'au moins un nid de frelons.

6. Dispositif (1) de diffusion d'un aérosol, notamment pour la mise en œuvre d'un procédé selon l'une quelconque des revendications précédentes, comportant :
- un réservoir (2) adapté pour contenir un fluide sous pression, le réservoir (2) contenant une composition insecticide sous pression destinée à être distribuée sous forme d'aérosol, la composition insecticide comportant :
• un produit insecticide apte à tuer les guêpes et/ou les frelons, et
• un mélange d'au moins un gaz liquéfié et d'au moins un gaz comprimé, le mélange étant configuré pour permettre la propulsion du produit insecticide lors de sa pulvérisation, la composition insecticide étant **caractérisée en ce que** :
• le mélange comporte, notamment est constitué par, un mélange 1,1,1,2-tétrafluoroéthane et dioxyde de carbone, et **en ce que**
• le rapport massique entre la masse de gaz liquéfié(s) et la masse de gaz comprimé(s) est compris entre 5 et 30, notamment entre 15 et 25,
- une tête de pulvérisation (3) fixée au réservoir (2) comportant un orifice de distribution (4) permettant la distribution du produit insecticide vers le milieu extérieur,
- un moyen d'actionnement (12) de la distribution du produit insecticide au travers de l'orifice de distribution (4).

7. Dispositif selon la revendication 6, le dispositif (1) étant configuré pour distribuer le produit insecticide au travers de l'orifice de distribution (4) avec un débit supérieur ou égal à 40 grammes de produit insecticide par seconde, de préférence à 50 grammes de produit insecticide par seconde, de préférence à 60 grammes de produit insecticide par seconde, de préférence à 70 grammes de produit insecticide par seconde, de préférence à 80 grammes de produit insecticide par seconde

8. Dispositif selon la revendication 6 ou 7, le dispositif (1) comportant une partie de préhension (10) fixée au réservoir (2) et à la tête de pulvérisation (3), la partie de préhension (10) portant le moyen d'actionnement (12) de la distribution du produit insecticide, la partie de préhension (10) étant sous la forme d'un manche et le moyen d'actionnement sous la forme d'une détente (12) permettant d'actionner la distribution du produit insecticide par pression sur la détente (12).

9. Dispositif selon l'une des revendications 6 à 8, la tête de pulvérisation (3) comportant une valve de diffusion (40) débouchant par au moins un gicleur (6) au niveau de l'orifice de distribution (4), le gicleur (6) ayant sur tout ou partie de sa longueur un diamètre interne (d) supérieur ou égal à 4 mm, de préférence à 4,5 mm, de préférence à 5 mm, de préférence à 5,5 mm, de préférence à 6 mm, le gicleur (6) ayant, par exemple, sur tout ou partie de sa longueur un diamètre interne (d) compris entre 5 mm et 7 mm, notamment entre 5,5 mm et 6,5 mm.

10. Dispositif selon l'une des revendications 6 à 9, la tête de pulvérisation (3) comportant une valve de diffusion (40) débouchant par au moins un gicleur (6) au niveau de l'orifice de distribution (4), le gicleur (6) présentant une pluralité d'orifices (30), notamment deux orifices (30), au travers desquels le produit insecticide est destiné à pénétrer dans le gicleur (6) lors de l'actionnement de la distribution du produit insecticide.

11. Dispositif selon la revendication 10, tout ou partie des orifices (30) ayant une taille supérieure ou égale à 0,7 mm, de préférence à 1 mm, de préférence à 1,5 mm, de préférence à 2 mm, de préférence à 2,5 mm, de préférence à 3 mm, la taille de tout ou partie des orifices (30) étant, par exemple, comprise entre 3 mm et 4 mm, notamment comprise entre 3 mm et 3,5 mm.

12. Dispositif selon l'une des revendications 6 à 11, le rapport massique entre la masse de gaz liquéfié(s) plus la masse de gaz comprimé(s) et la masse totale de la composition insecticide étant compris entre 25 % et 70 %, notamment entre 35 % et 50 %.

13. Réservoir (2) adapté pour contenir un fluide sous pression, le réservoir (2) contenant une composition insecticide sous pression destinée à être distribuée sous forme d'aérosol, la composition insecticide étant notamment destinée à la mise en œuvre d'un procédé selon l'une quelconque des revendications 1 à 5, et la composition insecticide comportant :
- un produit insecticide apte à tuer les guêpes et/ou les frelons, et
- un mélange d'au moins un gaz liquéfié et d'au moins un gaz comprimé, le mélange étant configuré pour permettre la propulsion du produit insecticide lors de sa pulvérisation, **caractérisé en ce que** le mélange comporte, notamment est constitué par, un mélange 1,1,1,2-tétrafluoroéthane et dioxyde de carbone, et **en ce que** le rapport massique entre la masse de gaz liquéfié(s) et la masse de gaz comprimé(s) est compris entre 5 et 30, notamment entre 15 et 25.

14. Réservoir selon la revendication précédente, le réservoir (2) ayant un volume inférieur ou égal à 1 L, de préférence compris entre 0,1 L et 1 L, de préférence compris entre 0,5 L et 1 L.

## Patentansprüche

1. Verfahren zur Beseitigung von Insekten (G), umfassend einen Schritt der Zerstäubung einer Insektizidzusammensetzung, um Wespen (G) und/oder Hornissen zu beseitigen, wobei die Zerstäubung mit Hilfe einer Vorrichtung (1) zur Verteilung eines Aerosols erfolgt, wobei die Insektizidzusammensetzung umfasst:
• ein Insektizidprodukt, das geeignet ist, die Wespen und/oder Hornissen zu töten, und
• ein Gemisch mindestens eines verflüssigten Gases und mindestens eines komprimierten Gases, wobei das Gemisch dazu vorgesehen ist, den Vortrieb des Insektizidprodukts bei seiner Zerstäubung zu ermöglichen,
wobei die Insektizidzusammensetzung **dadurch gekennzeichnet ist, dass** das Gemisch ein 1,1,1,2-Tetrafluorethan- und Kohlendioxid-Gemisch umfasst, insbesondere von einem solchen gebildet ist, und dass die Masse von komprimiertem(n) Gas(en) zwischen 5 und 30, insbesondere zwischen 15 und 25, ausmacht.

2. Verfahren nach Anspruch 1, wobei das verflüssigte Gas ausgewählt ist unter: den Fluorkohlenwasserstoffen, den Alkanen, insbesondere Butan, Propan oder den Butan/Propan-Gemischen, Dimethylether oder ihren Gemischen, wobei das verflüssigte Gas vorzugsweise ein Fluorkohlenwasserstoff, auf besonders bevorzugte Weise 1,1,1,2-Tetrafluorethan, ist.

3. Verfahren nach einem der Ansprüche 1 bis 2, wobei das komprimierte Gas ausgewählt ist unter: Stickstoff, Kohlendioxid, Stickstoffprotoxid, Luft oder ihren Gemischen, wobei das komprimierte Gas vorzugsweise Kohlendioxid ist.

4. Verfahren nach einem der vorhergehenden Ansprüche, wobei das Massenverhältnis zwischen der Masse von verflüssigtem(n) Gas(en) plus die Masse von komprimiertem(n) Gas(en) und der Gesamtmasse der Insektizidzusammensetzung zwischen 25 % und 70 %, vorzugsweise zwischen 35 % und 50 %, beträgt.

5. Verfahren nach einem der vorhergehenden Ansprüche, wobei das Insektizidprodukt in mindestens einem Wespennest und/oder mindestens einem Hornissennest zerstäubt wird.

6. Vorrichtung (1) zur Verteilung eines Aerosols, insbesondere für den Einsatz eines Verfahrens nach einem der vorhergehenden Ansprüche, umfassend:
- einen Behälter (2), der dazu vorgesehen ist, ein Druckfluid zu enthalten, wobei der Behälter (2) eine Insektizidzusammensetzung unter Druck enthält, die dazu bestimmt ist, in Form eines Aerosols verteilt zu werden, wobei die Insektizidzusammensetzung umfasst:
• ein Insektizidprodukt, das geeignet ist, die Wespen und/oder Hornissen zu töten, und
• ein Gemisch mindestens eines verflüssigten Gases und mindestens eines komprimierten Gases, wobei das Gemisch dazu vorgesehen ist, den Vortrieb des Insektizidprodukts bei seiner Zerstäubung zu ermöglichen, wobei die Insektizidzusammensetzung **dadurch gekennzeichnet ist, dass**:
• das Gemisch ein 1,1,1,2-Tetrafluorethan- und Kohlendioxid-Gemisch umfasst, insbesondere von einem solchen gebildet ist, und dass
• das Massenverhältnis zwischen der Masse von verflüssigtem(n) Gas(en) und der Masse von komprimiertem(n) Gas(en) zwischen 5 und 30, insbesondere zwischen 15 und 25, ausmacht,
- einen Zerstäubungskopf (3), der am Behälter (2) befestigt ist, umfassend eine Verteilungsöffnung (4), die die Verteilung des Insektizidprodukts nach außen ermöglicht,
- ein Betätigungsmittel (12) zur Verteilung des Insektizidprodukts durch die Verteilungsöffnung (4).

7. Vorrichtung nach Anspruch 6, wobei die Vorrichtung (1) dazu vorgesehen ist, das Insektizidprodukt durch die Verteilungsöffnung (4) in einer Menge größer oder gleich 40 Gramm Insektizidprodukt pro Sekunde, vorzugsweise 50 Gramm Insektizidprodukt pro Sekunde, vorzugsweise 60 Gramm Insektizidprodukt pro Sekunde, vorzugsweise 70 Gramm Insektizidprodukt pro Sekunde, vorzugsweise 80 Gramm Insektizidprodukt pro Sekunde, zu verteilen.

8. Vorrichtung nach Anspruch 6 oder 7, wobei die Vorrichtung (1) ein Teil zum Greifen (10) umfasst, das am Behälter (2) und am Zerstäubungskopf (3) befestigt ist, wobei das Teil zum Greifen (10) das Betätigungsmittel (12) zur Verteilung des Insektizidprodukts trägt, wobei das Teil zum Greifen (10) in Form eines Griffes und das Betätigungsmittel in Form einer Entsperrung (12) vorhanden ist, die es ermöglicht, die Verteilung des Insektizidprodukts durch Druck auf die Entsperrung (12) zu betätigen.

9. Vorrichtung nach einem der Ansprüche 6 bis 8, wobei der Zerstäubungskopf (3) ein Verteilungsventil (40) umfasst, das durch mindestens eine Düse (6) im Bereich der Verteilungsöffnung (4) mündet, wobei die Düse (6) auf der Gesamtheit oder einem Teil ihrer Länge einen Innendurchmesser (d) größer oder gleich 4 mm, vorzugsweise 4,5 mm, vorzugsweise 5 mm, vorzugsweise 5,5 mm, vorzugsweise 6 mm, aufweist, wobei die Düse (6) beispielsweise auf der Gesamtheit oder einem Teil ihrer Länge einen Innendurchmesser (d) zwischen 5 mm und 7 mm, insbesondere zwischen 5,5 mm und 6,5 mm, aufweist.

10. Vorrichtung nach einem der Ansprüche 6 bis 9, wobei der Zerstäubungskopf (3) ein Verteilungsventil (40) umfasst, das durch mindestens eine Düse (6) im Bereich der Verteilungsöffnung (4) mündet, wobei die Düse (6) eine Vielzahl von Öffnungen (30), insbesondere zwei Öffnungen (30), aufweist, durch die das Insektizidprodukt in die Düse (6) bei der Betätigung der Verteilung des Insektizidprodukts eindringen soll.

11. Vorrichtung nach Anspruch 10, wobei die Gesamtheit oder ein Teil der Öffnungen (30) eine Größe größer oder gleich 0,7 mm, vorzugsweise 1 mm, vorzugsweise 1,5 mm, vorzugsweise 2 mm, vorzugsweise 2,5 mm, vorzugsweise 3 mm, aufweist, wobei die Größe der Gesamtheit oder eines Teils der Öffnungen (30) beispielsweise zwischen 3 mm und 4 mm, insbesondere zwischen 3 mm und 3,5 mm, beträgt.

12. Vorrichtung nach einem der Ansprüche 6 bis 11, wobei das Massenverhältnis zwischen der Masse von verflüssigtem(n) Gas(en) plus der Masse von komprimiertem(n) Gas(en) und der Gesamtmasse der Insektizidzusammensetzung zwischen 25 % und 70 %, insbesondere zwischen 35 % und 50 %, beträgt.

13. Behälter (2), der dazu vorgesehen ist, ein Druckfluid zu enthalten, wobei der Behälter (2) eine Insektizidzusammensetzung unter Druck enthält, die dazu bestimmt ist, in Form eines Aerosols verteilt zu werden, wobei die Insektizidzusammensetzung insbesondere für den Einsatz eines Verfahrens nach einem der Ansprüche 1 bis 5 bestimmt ist, wobei die Insektizidzusammensetzung umfasst:
- ein Insektizidprodukt, das geeignet ist, die Wespen und/oder Hornissen zu töten, und
- ein Gemisch mindestens eines verflüssigten Gases und mindestens eines komprimierten Gases, wobei das Gemisch dazu vorgesehen ist, den Vortrieb des Insektizidprodukts bei seiner Zerstäubung zu ermöglichen, **dadurch gekennzeichnet, dass** das Gemisch ein 1,1,1,2-Tetrafluorethan- und Kohlendioxid-Gemisch umfasst, und dass das Massenverhältnis zwischen der Masse von verflüssigtem(n) Gas(en) und der Masse von komprimiertem(n) Gas(en) zwischen 5 und 30, insbesondere zwischen 15 und 25, ausmacht.

14. Behälter nach dem vorhergehenden Anspruch, wobei der Behälter (2) ein Volumen kleiner oder gleich 1 L, vorzugsweise zwischen 0,1 L und 1 L, vorzugsweise zwischen 0,5 L und 1 L, aufweist.

## Claims

1. Method for eliminating insects (G) comprising a step of spraying an insecticidal composition so as to eliminate wasps (G) and/or hornets, the spraying being carried out by means of a device (1) for dispersing an aerosol, the insecticidal composition comprising:
• an insecticidal product capable of killing wasps and/or hornets, and
• a mixture of at least one liquefied gas and at least one compressed gas, the mixture being configured to allow the propelling of the insecticidal product during spraying thereof,
the insecticidal composition being **characterized in that** the mixture comprises, in particular consists of, a mixture of 1,1,1,2-tetrafluoroethane and carbon dioxide, and **in that** the weight ratio between the weight of liquefied gas(es) and the weight of compressed gas(es) is between 5 and 30, in particular between 15 and 25.

2. Method according to Claim 1, the liquefied gas being chosen from: hydrofluorocarbons, alkanes, in particular butane, propane or butane/propane mixtures, dimethyl ether, or mixtures thereof, the liquefied gas preferably being a hydrofluorocarbon, particularly preferably 1,1,1,2-tetrafluoroethane.

3. Method according to either one of Claims 1 and 2, the compressed gas being chosen from: nitrogen, carbon dioxide, nitrous oxide, air or mixtures thereof, the compressed gas preferably being carbon dioxide.

4. Method according to any one of the preceding claims, the weight ratio between the weight of liquefied gas(es) plus the weight of compressed gas(es), and the total weight of the insecticidal composition being between 25% and 70%, in particular between 35% and 50%.

5. Method according to any one of the preceding claims, the insecticidal product being sprayed in at least one wasp nest and/or at least one hornet nest.

6. Device (1) for dispersing an aerosol, in particular for carrying out a method according to any one of the preceding claims, comprising:
- a reservoir (2) suitable for containing a pressurized fluid, the reservoir (2) containing a pressurized insecticidal composition intended to be dispensed in the form of an aerosol, the insecticidal composition comprising:
• an insecticidal product capable of killing wasps and/or hornets, and
• a mixture of at least one liquefied gas and at least one compressed gas, the mixture being configured to allow the propelling of the insecticidal product during spraying thereof, the insecticidal composition being **characterized in that**:
• the mixture comprises, in particular consists of, a mixture of 1,1,1,2-tetrafluoroethane and carbon dioxide, and **in that**
• the weight ratio between the weight of liquefied gas(es) and the weight of compressed gas(es) is between 5 and 30, in particular between 15 and 25,
- a spray head (3) attached to the reservoir (2), comprising a dispensing orifice (4) which allows the dispensing of the insecticidal product to the external environment,
- a means for actuating (12) the dispensing of the insecticidal product through the dispensing orifice (4).

7. Device according to Claim 6, the device (1) being configured for dispensing the insecticidal product through the dispensing orifice (4) with a flow rate greater than or equal to 40 grams of insecticidal product per second, preferably greater than or equal to 50 grams of insecticidal product per second, preferably greater than or equal to 60 grams of insecticidal product per second, preferably greater than or equal to 70 grams of insecticidal product per second, preferably greater than or equal to 80 grams of insecticidal product per second.

8. Device according to Claim 6 or 7, the device (1) comprising a grasping part (10) attached to the reservoir (2) and to the spray head (3), the grasping part (10) bearing the means of actuating (12) the dispensing of the insecticidal product, the grasping part (10) being in the form of a sleeve and the actuating means being in the form of a trigger (12) which makes it possible to actuate the dispensing of the insecticidal product by pressing on the trigger (12).

9. Device according to one of Claims 6 to 8, the spray head (3) comprising a dispersing valve (40) which opens onto at least one nozzle (6) at the level of the dispensing orifice (4), the nozzle (6) having, over all or part of its length, an internal diameter (d) greater than or equal to 4 mm, preferably greater than or equal to 4.5 mm, preferably greater than or equal to 5 mm, preferably greater than or equal to 5.5 mm, preferably greater than or equal to 6 mm, the nozzle (6) having, for example, over all or part of its length, an internal diameter (d) of between 5 mm and 7 mm, in particular between 5.5 mm and 6.5 mm.

10. Device according to one of Claims 6 to 9, the spray head (3) comprising a dispersing valve (40) which opens onto at least one nozzle (6) at the level of the dispensing orifice (4), the nozzle (6) having a plurality of orifices (30), in particular two orifices (30), through which the insecticidal product is intended to penetrate into the nozzle (6) during the actuating of the dispensing of the insecticidal product.

11. Device according to Claim 10, all or some of the orifices (30) having a size greater than or equal to 0.7 mm, preferably greater than or equal to 1 mm, preferably greater than or equal to 1.5 mm, preferably greater than or equal to 2 mm, preferably greater than or equal to 2.5 mm, preferably greater than or equal to 3 mm, the size of all or some of the orifices (30) being, for example, between 3 mm and 4 mm, in particular between 3 mm and 3.5 mm.

12. Device according to one of Claims 6 to 11, the weight ratio between the weight of liquefied gas(es) plus the weight of compressed gas(es), and the total weight of the insecticidal composition being between 25% and 70%, in particular between 35% and 50%.

13. Reservoir (2) suitable for containing a pressurized fluid, the reservoir (2) containing a pressurized insecticidal composition intended to be dispensed in the form of an aerosol, the insecticidal composition being in particular intended for carrying out a method according to any one of Claims 1 to 5, and the insecticidal composition comprising:
- an insecticidal product capable of killing wasps and/or hornets, and
- a mixture of at least one liquefied gas and at least one compressed gas, the mixture being configured to allow the propelling of the insecticidal product during spraying thereof, **characterized in that** the mixture comprises, in particular consists of, a mixture of 1,1,1,2-tetrafluoroethane and carbon dioxide, and **in that** the weight ratio between the weight of liquefied gas(es) and the weight of compressed gas(es) is between 5 and 30, in particular between 15 and 25.

14. Reservoir according to the preceding claim, the reservoir (2) having a volume of less than or equal to 1 1, preferably of between 0.1 1 and 1 1, preferably of between 0.5 1 and 1 1.
